# EUROPEAN PATENT SPECIFICATION

(11) **EP 0 765 625 B1**
(45) Date of publication and mention of the grant of the patent: **11.11.1998**
(21) Application number: 96306747.5
(22) Date of filing: 17.09.1996
(51) Int. Cl.: A47J 37/10

(54) **Improvements in or relating to woks**
Verbesserungen in oder bezüglich Woks
Améliorations pour ou concernant Woks

(30) Priority: 28.09.1995 AU PN5701/95
(43) Date of publication of application: 02.04.1997
(73) Proprietor: Breville Pty Ltd., Botany, New South Wales 2019 (AU)
(72) Inventor: McClean, John William, Botany, New South Wales 2019 (AU)
(74) Representative: Watkins, David

(56) References cited:
- EP-A- 0 629 820
- US-A- 4 313 416
- US-A- 4 435 638
- US-A- 4 555 616

## Description

The present invention relates to woks and more particularly to electrically heated woks.

Electrically heated "woks" normally have a relatively flat central portion, to the underside of which an electric heating element is attached. While such woks are reasonably satisfactory they do have the defect that the heat is mainly concentrated at the bottom of the container and relatively little heat is available for cooking food in the curved area of the wok surrounding the central portion. US 5129314 discloses a typical electrically heated "wok". A second disadvantage of such "woks" is that unlike traditional flame heated woks they do not have a curved or rounded centre/bottom. Such a rounded bottom not only improves distribution of heat for cooking food when heated on an open flame but also, particularly when stir frying food, improves the ease of control of the food in the wok particularly for coating food with cooking oil, sauces, and generally when turning and stirring food. The other major advantage of a traditional wok is that there are no "corners" in which food can become trapped.

Users of woks that do not incorporate an electric heating element usually keep the wok in movement over a gas flame so that heat is applied not only to the bottom of the wok but to portions of the sides adjacent the central portion. To allow this movement, US 4555616 discloses an electrically heated round bottomed wok (see preamble of claim 1) of complicated construction and fixed to a stand in such a manner that the wok is tiltable relative to the stand. US 4435638 discloses a resistance heating element formed in a spiral pattern to a spherical radius to provide conductive heating, to a separate wok. The resistance element is supported by a support which accommodates the spherical surface of the heating element.

The present invention provides wok comprising a rounded body part, the rounded body part having a rounded central portion defining a non-flat bottom part, and curved portions surrounding the central portion, an electric heating element a first portion of which extends in the area of the underside of the central portion of the wok, characterised in that the heating element has a second portion continuous with the first portion which extends circumferentially on the underside of the wok in a substantially part-circular path extending over the curved portions of the wok surrounding the central portion, the heating element being integral with the wok and being secured to the outer surface of the body part of the wok and further characterised in that the heating element is terminated in a pair of adjacent connectors, the first portion of the element defining opposed generally "C"-shaped portions substantially symmetrically disposed about a plane passing midway between the connectors and through the centre of the wok, each of the generally "C"-shaped portions then bending in an opposite sense to the curve of the "C"-shape to join with the second portion, said second portion also being substantially symmetrically disposed about the plane.

The wok may be made of pressed sheet aluminium and the heating element is secured to the wok by brazing.

Alternatively, the wok is made from cast aluminium and the heating element is attached to the wok by staking in grooves cast on the outer surface of the wok.

Preferably the diameter of the second portion of the heating element is of the order of 23cm.

In a preferred embodiment, the heating element is of a "D"-shaped cross-section, the flat surface thereof lying against the outer surface of the wok, the element being terminated in a pair of connectors for connecting to a power supply.

In order that the nature of the invention may be better understood a preferred form thereof is illustrated, by way of example, in the accompanying drawings, in which:
Figure 1 is a view of the underside of a wok according to one form of the invention;
Figure 2 is a side elevation thereof;
Figure 3 is a front elevation of the lower parts thereof; and
Figure 4 is a section on line AA of Figure 1;

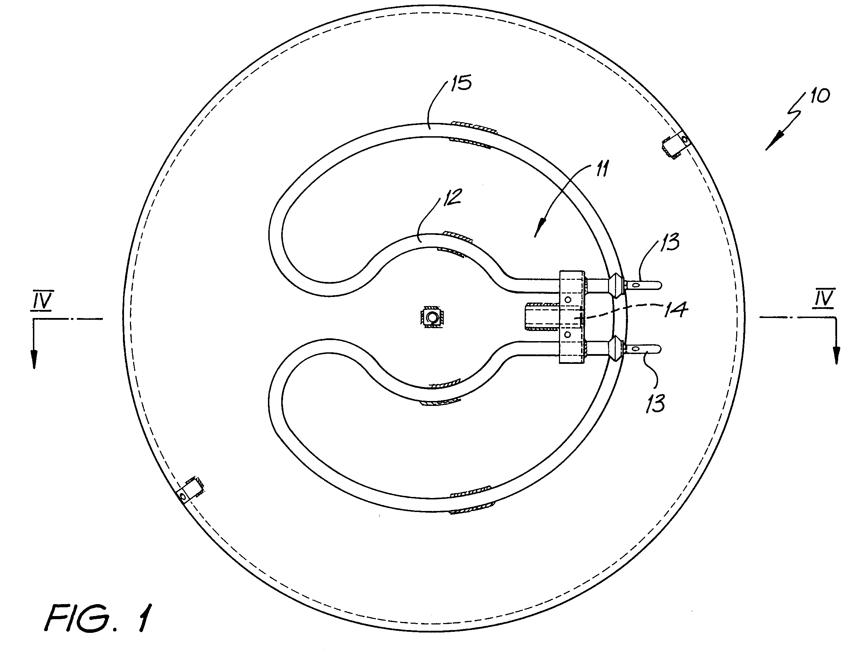

Figure 1 shows a view of the underside of a wok 10 having on its underside an electric heating element 11. The electric heating element consists of a first portion 12 which extends over the central area only of the wok and is terminated in connectors 13, a probe tunnel 14 being arranged in the position shown.

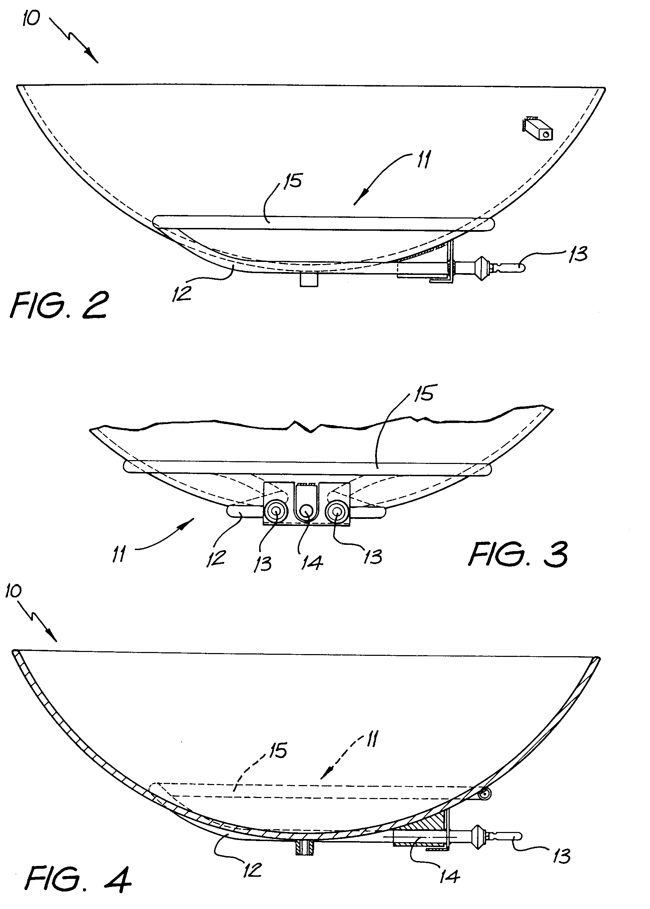

The heating element 11 has a second portion 15 which extends circumferentially over an area of the curved surface of the wok at a distance from the centre corresponding to the area in which food may be cooked. It is considered that a suitable diameter for the outer portion 15 of the heating element is of the order of 23cm. As may be seen from Figure 1, the portion 15 of the heating element is continuous with the portion 12. It is preferred that the cross-section of the heating element should be "D"-shaped as seen in Figure 4, the flat surface lying against the surface of the wok.

The body of the wok 10 is formed from aluminium sheet which is pressed to the shape shown in Figure 2 and the heating element 11 is secured to the outer surface of the wok by brazing. It is to be noted that it is essential that the brazing metal should make close contact both with the metal of the wok and with the heating element so that heat is conducted effectively from the heating element of the body of the wok.

A wok made from cast aluminium will have an appearance similar to the wok shown in Figure 1, the heating element in this case being set in a groove formed on the underside of the wok, the heating element being held in position by staking.

It will be appreciated by persons skilled in the art that numerous variations and/or modifications may be made to the invention as shown in the specific embodiments without departing from the scope of the invention as broadly claimed. The present embodiments are, therefore, to be considered in all respects as illustrative and not restrictive.

## Claims

1. A wok (10) comprising a rounded body part, the rounded body part having a rounded central portion defining a non-flat bottom part, and curved portions surrounding the central portion, an electric heating element (11) a first portion (12) of which extends in the area of the underside of the central portion of the wok characterised in that the heating element (11) has a second portion (15) continuous with the first portion which extends circumferentially on the underside of the wok in a substantially part-circular path extending over the curved portion of the wok surrounding the central portion, the heating element being integral with the wok and being secured to the outer surface of the body part of the wok and further characterised in that the heating element (11) is terminated in a pair of adjacent connectors (13), the first portion (12) of the element defining opposed generally "C"-shaped portions (12) substantially symmetrically disposed about a plane passing midway between the connectors and through the centre of the wok, each of the generally "C"-shaped portions then bending in an opposite sense to the curve of the "C"-shape to join with the second portion (15), said second portion (15) also being substantially symmetrically disposed about the plane.

2. A wok as claimed in claim 1 characterised in that the wok is made of pressed sheet aluminium and the heating element is secured to the wok by brazing.

3. A wok as claimed in claim 1 or claim characterised in that the wok is made from cast aluminium and the heating element is attached to the wok by staking in grooves cast on the outer surface of the wok.

4. A wok as claimed in any preceding claim characterised in that the diameter of the second portion of the heating element is of the order of 23cm.

5. A wok as claimed in any preceding claim characterised in that the heating element is of a "D"-shaped cross-section, the flat surface thereof lying against the outer surface of the wok.

## Patentansprüche

1. Wok (10) bestehend aus einem gewölbten Körper, der einen gewölbten Hauptabschnitt, der einen nicht-flachen Boden definiert, und den Hauptabschnitt umgebende gebogene Abschnitte aufweist, einem elektrischen Heizelement (11), dessen erster Abschnitt (12) im Bereich der Unterseite des Wok-Hauptabschnittes verläuft, dadurch gekennzeichnet, daß das Heizelement (11) einen den ersten Abschnitt fortsetzenden zweiten Abschnitt (15) aufweist, der in einer weitgehend teilkreisförmigen Bahn auf dem Umfang der Wok-Unterseite verläuft und sich über die den Hauptabschnitt umgebenden gebogenen Wok-Abschnitte ausdehnt, wobei das Heizelement in den Wok integriert und an der Außenseite des Wok-Körpers befestigt ist und weiterhin dadurch gekennzeichnet, daß das Heizelement (11) in einem Paar nebeneinander-liegender Anschlußklemmen (13) endet, wobei der erste Elementabschnitt (12) entgegengesetzte, allgemein nach Art eines 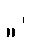 Cs" geformte Stücke (12) definiert, die weitgehend symmetrisch auf einer mittig zwischen den Anschlüssen und durch die Wok-Mitte verlaufenden Ebene angeordnet sind, und danach jedes der allgemein nach Art eines 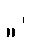 Cs" geformten Stücke in zur Kurve der 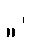 C"-Form entgegengesetzter Richtung gebogen ist und sich mit dem zweiten Elementabschnitt (15) verbindet, und der zweite Abschnitt (15) ebenfalls weitgehend symmetrisch in der Ebene angeordnet ist.

2. Wok gemäß Anspruch 1, dadurch gekennzeichnet, daß der Wok aus gepreßtem Aluminiumblech gefertigt ist und das Heizelement durch Hartlöten am Wok befestigt ist.

3. Wok gemäß Anspruch 1 oder 2, dadurch gekennzeichnet, daß der Wok aus Gußaluminium besteht und das Heizelement durch Festklemmen in Rillen am Wok befestigt ist, die in die Außenseite des Woks eingegossen sind.

4. Wok gemäß einem der vorhergehenden Ansprüche, dadurch gekennzeichnet, daß der Durchmesser des zweiten Heizelementabschnittes ungefähr 23cm beträgt.

5. Wok gemäß einem der vorhergehenden Ansprüche, dadurch gekennzeichnet, daß das Heizelement im Querschnitt 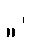 D"-förmig ist und mit der flachen Oberfläche auf der Außenseite des Woks aufliegt.

## Revendications

1. Wok (10) comprenant une partie de corps arrondie, la partie de corps arrondie comportant une partie centrale arrondie définissant une partie de fond non plate, et des parties courbes entourant la partie centrale, un élément chauffant électrique (11) dont une première partie (12) s'étend dans la zone du dessous de la partie centrale du wok, caractérisé en ce que l'élément chauffant (11) comporte une deuxième partie (15) continuant la première partie qui s'étend circonférentiellement sur le dessous du wok dans un trajet sensiblement partiellement circulaire s'étendant par-dessus les parties courbes du wok entourant la partie centrale, caractérisé en ce que l'élément chauffant faisant partie intégrante du wok et étant fixé à la surface externe de la partie de corps du wok et en outre caractérisé en ce que l'élément chauffant (11) se termine dans une paire de connecteurs adjacents (13), la première partie (12) de l'élément définissant des parties opposées en forme générale de "C" disposées de manière sensiblement symétrique autour d'un plan passant à mi-chemin entre les conducteurs et à travers le centre du wok, chacune des parties en forme générale de "C" se courbant ensuite dans un sens opposé à celui de la courbe en forme de "C" pour rejoindre la deuxième partie (15), ladite deuxième partie (15) étant aussi disposée de manière sensiblement symétrique autour du plan.

2. Wok selon la revendication 1, caractérisé en ce que le wok est réalisé en feuilles pressées d'aluminium et l'élément chauffant est fixé au wok par brasage.

3. Wok selon la revendication 1 ou la revendication 2, caractérisé en ce que le wok est réalisé en aluminium fondu et l'élément chauffant est fixé au wok par enfichage dans des rainures formées sur la surface externe du wok.

4. Wok selon l'une quelconque des revendications précédentes, caractérisé en ce que le diamètre de la deuxième partie de l'élément chauffant est de l'ordre de 23cm.

5. Wok selon l'une quelconque des revendications précédentes, caractérisé en ce que l'élément chauffant a une coupe transversale en forme de "D", la surface plate de celui-ci reposant contre la surface externe du wok.
